# EUROPEAN PATENT SPECIFICATION

(11) **EP 0 458 565 B1**
(45) Date of publication and mention of the grant of the patent: **19.07.1995**
(21) Application number: 91304535.7
(22) Date of filing: 20.05.1991
(51) Int. Cl.: G11B 7/085, G11B 7/09, G11B 21/08, G11B 21/10

(54) **Servo controlled positioning system**
Servo-kontrolliertes Positionierungssystem
Système de positionnement à servo-commande

(30) Priority: 25.05.1990 US 528527
(43) Date of publication of application: 27.11.1991
(73) Proprietor: International Business Machines Corporation, Armonk, N.Y. 10504 (US)
(72) Inventor: Chow, William Wai-Chung, Tucson, Arizona 85748 (US); Fennema, Alan August, Tucson, Arizona 85712 (US)
(74) Representative: Burt, Roger James, Dr.

(56) References cited:
- EP-A- 0 167 177
- DE-A- 3 604 604
- US-A- 4 839 876

## Description

The present invention relates to servo-controlled positioning systems, particularly to those servo-controlled positioning systems adaptable or particularly useful in data recording devices. Such recording devices can include optical recording disks on which data is recorded in concentric tracks. The tracks are accessed by an optical (laser) beam for recording and read out of data. It is necessary to control the movement of the beam so that it moves across the tracks to seek a required track and then follows the track.

Servo-controlled positioning systems have been used for many applications, some of which include magnetic and optical data recorders. Most servo-controlled positioners have a so-called "stop-lock" position wherein the tool, transducer or lens, is held at a relatively stable position and a seeking or moving mode, which for data recorders is termed track seeking. Many of the servo-controlled positioners employ a first control loop for the "stop lock" position and a second control loop in the seeking or moving mode. Switching between the two loops can induce undesired transients, as well as require a substantial number of circuits for the two respective loops. It is desired to use a single loop for both the stop lock and moving functions of servo-controlled positioners.

US -A- 4,839,876 reflecting the subject matter of the preamble of the independent claims shows a single loop control for an optical disk data recorder which is position controlled throughout; that is the relative position of the lens to a track or set of tracks for data recording is an independent input variable. It is desired to provide a single loop servo-controlled positioning system which uses a velocity mode in the track seeking or traversing mode, yet provides an effective "stop-lock" control.

Another single loop servo-controlled positioning system is shown in US -A- 4,217,612 and this always uses a position error input for controlling the servo; that is, the relative position of a transducer to the magnetic recording disk is the independent input variable to be compared with a reference for effecting servo actions. US -A- 4,607,201, shows a track following position control loop i.e., always providing for "stop-lock"; since this reference does not provide for track seeking, it is not pertinent to the invention of the present application. US -A- 4,575,776, shows a seek or movement control for a positional servo in which a simulated position error signal is used. US -A- 4,435,797, shows a servo-controlled position scheme of a classical type in which a separate servo loop is provided for track-following (stop lock) and for seeking. It is known that such separate seek loops have used velocity profile controls for controlling the seek while the track-following (stop lock) controls use position error controls.

The object of the present invention is to provide an improved servo controlled positioning system.

The present invention relates to a servo controlled positioning system of the type comprising two relatively moveable members, a motive means for positioning the two relatively moveable members, sensing means for sensing the relative positions of the relatively moveable members and for generating a position error signal representing the relative positions of the members, a servo mechanism for processing the position error signal in accordance with the relative speed of movement of the members, and means for supplying the processed position error signal to the motive means so as to move the members into desired relative positions.

According to the invention the positioning system is characterised in that the servo mechanism comprises dynamic changing means for changing the dynamic range of the position error signal in accordance with the range of speeds of relative movement of the members so that the dynamic range corresponds to a reference dynamic range, means for processing the position error signal after changing of its dynamic range, and dynamic range restoring means for restoring the dynamic range of the processed position error signal to its original value before the changing operation.

In order that the invention may be more readily understood an embodiment will now be described with reference to the accompanying drawings, in which :
Fig. 1 is a simplified block diagram of a servo-controlled positioning system using the present invention in an optical disk data recorder,
Fig. 2 is a block diagram of one embodiment of the non-linear range change servo used in the Fig. 1 illustrated system,
Fig. 3 in a block diagram of an alternative embodiment of the range-change servo used in the Fig. 1 illustrated system,
Fig. 4 shows a range selection circuit usable in the servos illustrated in Figs. 2 and 3, and
Fig. 5 is a circuit diagram showing switchable attenuators used in the components illustrated in Figs. 2, 3 and 4.

Referring now more particularly to the drawings, like numerals indicate like parts and structural features in the various Figures.

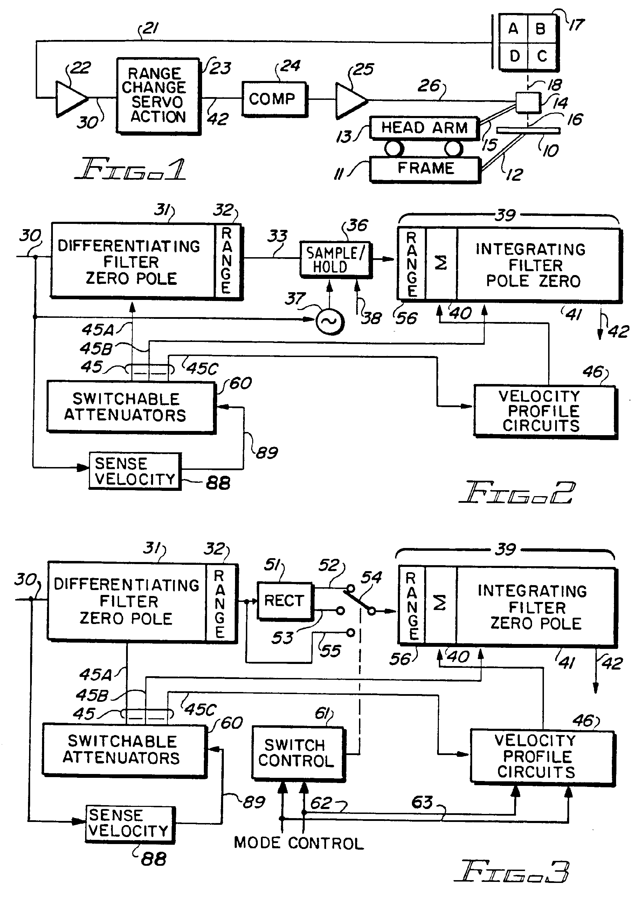

Referring to Fig. 1 an optical recording disk 10 is mounted for rotation on frame 11 as indicated by double line 12. Data is recorded in selected positions in concentric tracks on the disk 10. A motor (not shown) suitably rotates the disk 10 at speed. A head arm 13 is movably mounted on frame 11 and carries an actuator 14 as indicated by double line 15. Laser means (not shown) provide a laser beam which passes through a lens (not illustrated) supported on the actuator 14 along a light path 16 to optical recording disk 10. US -A- 4,839,876 illustrates a suitable lens support actuator 14 and the relationship to head arm 13. Movement of the head arm 13 and the actuator 14 carries movement of the laser beam over the surface of disk 10.

Disk 10 reflects the laser beam back along path 16 returning it through the lens on actuator 14, and thence over a light path 18 to a so called "quad detector" 17. Quad detector 17 consists of four electrically independent light responsive elements A-D. The four light-responsive elements A-D supply separate signals which are combined, using known techniques, into a signal to indicate when the laser beam crosses data recording tracks on the disk 10. The signal is a so-called tracking error signal (TES) and is supplied over line 21. Elements A-D are independently connected to the usual decode circuit, represented by the vertical line adjacent to the representation of the detector 17, to generate TES.

The TES on line 21 goes through a linear amplifier 22 to be supplied over line 30 to a range change servo action circuit 23. Circuit 23 responds to the measured or indicated radial speed of the laser light beam across the disk 10 for changing the dynamic range of TES to a centre or reference range, as will be described below. In this manner all actions in the servo loop for controlling the movement of the actuator 14 occur within the same dynamic range. Upon completion of the servo control action, the dynamic range of a generated device signal is again changed to the original range of TES and supplied through the usual servo compensator 24, thence through amplifier 25 and over line 26 for being supplied to actuator 14.

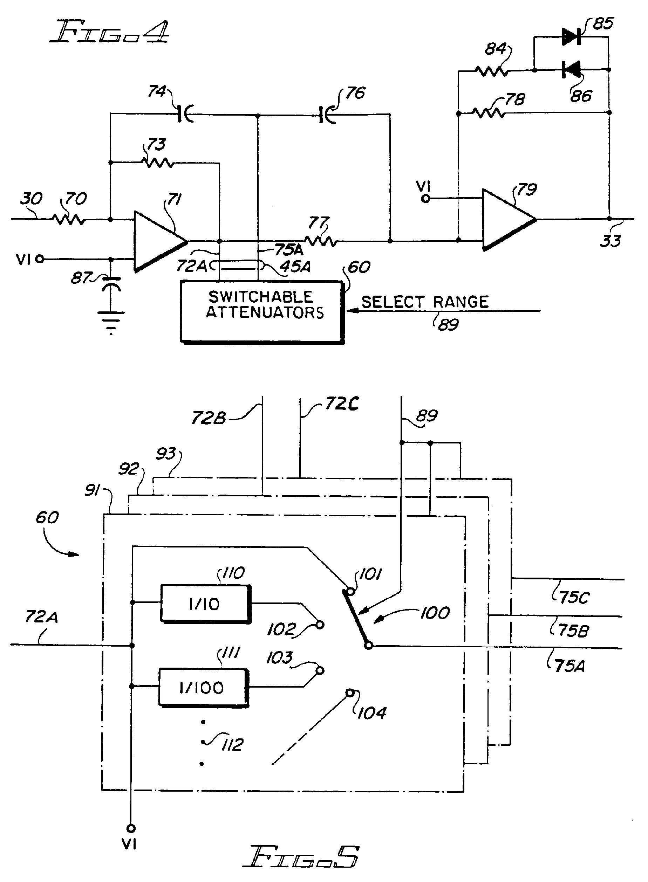

Fig. 2, which illustrates an embodiment of the range change servo action circuit 23, shows the signal TES on line 30 being supplied first to a differentiating filter 31 of the zero-pole type. A dynamic-range control signal on line 45A of a line group 45 from switchable attenuators 60 controls the filter 31 to adjust its operation such that its output signals are dynamic range shifted in accordance with the radial speed of the laser beam on path 16 as it traverses radially over disk 10. Switchable attenuators 60 (described below with reference to Figure 5) are supplied with a signal on line 89 from a sense velocity unit 88 which is supplied with the TES signal on line 30. The signal on line 89 represents the velocity over the disk 10 of the laser beam on path 16. Range circuit 32 also decreases the dynamic range with radial speed; i.e. both filter 31 and range circuit 32 compress the dynamic range of the TES signal. The filter 31 adjusts the dynamic range in steps i.e. under the control of switchable attenuators 60, as will be described below. As seen in Fig. 4, filter 31 and range circuit 32 can be integrated into one circuit.

The range-changed TES travels over line 33 to a sample and hold circuit 36. During track seeking by the laser beam on path 16, the timed operation of sample and hold circuit 36 can be controlled by an independent oscillator 37 placed to the zero axis crossings of TES on line 30. During track following by the laser beam on path 16, a signal on line 38 continuously enables sample and hold circuit 36. The line 38 signal is the usual track following signal commanding a track follow operation.

Sample and hold circuit 36 supplies its output to circuit 39. Circuit 39 has a dynamic range decompressing portion 56 which processes the sample and hold circuit 36 output signal to expand the dynamic range of the TES signal to its original range. Note that circuits 32 and 56 operate with the differentiating zero pole filter 31 and an integrating pole zero filter 41, in circuit 39, respectively in identical ways so as to provide dynamic range scaling of the TES signal being processed. Summing circuit 40, in circuit 39, compares the output signal of a velocity profile circuits 46 with the processed TES signal to produce the usual servo error signal which becomes the servo correction signal to be dynamic range scaled by integrating pole zero filter 41 to supply the usual servo control signal over line 42. The range scaling is performed by shifting the zero-poles in filters 31 and 41 as described below.

Fig. 3 illustrates an alternative embodiment of the range change servo action circuit 23. In this embodiment TES is received over line 30 into a differentiating zero-pole filter 31 which is controlled by a range select signal on line 45A received from range select circuit 60 as described for the embodiment illustrated in Fig. 2. Dynamic range compressing circuit 32 also non-linearly compresses the dynamic range of TES to create a range-changed TES. This range-changed TES is supplied to a rectifier 51 for use during the track seeking mode by the linear beam on path 16. The range-changed TES is also supplied directly to a terminal line 55 of a switch 54 for use during the track following mode. Switch control circuit 61 actuates switch 54 to move the moving arm of the switch to one of the three terminal lines 52, 53, 55, as will be later described.

In the track seeking mode, a rectified signal having a first polarity on line 52 is used in a radially inward moving seeking mode and switch 54 then connects line 52 to range circuit 56 of circuit 39. For a radially outward moving track seeking mode, the opposite polarity rectified signal from rectifier 51 is supplied over line 53 to the centre terminal of switch 54 and is then supplied through the switch to range circuit 56. During a track following mode (stop-lock), switch 54 connects line 55 directly to range circuit 56. This latter connection supplies the range-changed TES without alteration for track-following control. Thus, there are three modes of operation of the servo mechanism described; a track-following mode (switch 54 connects line 55 to range circuit 56) during which the velocity profile or reference circuits 46 apply a zero reference velocity to summing circuit 40; a first track seeking mode in the radially inward direction, during which switch 54 connects line 52 to range circuit 56; and a second track seeking mode in the radially outward direction during which line 53 is connected by switch 54 to range circuit 56. Switch control 61 and velocity profile circuits 46 both receive mode control signals including a direction or command control signal over a line 63 to indicate direction of seek and a "seek or no seek" control signal on line 62 which controls velocity profile circuits 46 to supply signals in accordance with a predetermined velocity profile to sum circuit 40 or to provide a zero velocity reference signal during track following. The mode control signal on line 62 also activates circuit 61 to set switch 54 as described above. Generating the seek direction mode control signals and track following mode control signals is in accordance with the usual procedure.

Fig. 4 illustrates the operation of the range shifting filters 31 and 41. These filters are substantially identical and operate substantially the same way. Therefore, only differenting filter 31 is described. It is understood that the change between the integrating filter 41 and the differentiating filter 31 is well known and can be readily implemented. The TES signal on line 30 goes through resistor 70 to a first operational amplifier 71. Composite line 45A of Figs. 2 and 3 consists of two lines 72A and 75A. Line 72A carries a signal from the output of operational amplifier 71 to the input of switchable attenuators 60 (see Fig. 5). The signal on line 75A from switchable attenuators 60 goes through capacitor 74 to a first input of amplifier 71 at resistor 70 and is fed forward through capacitor 76 to a first input of a second operational amplifier 79 at resistor 77. Resistor 77 is also connected to the output of operational amplifier 71. A reference input to operational amplifier 71 comprises a reference voltage V1 connected to a second input of the operational amplifier 71. Switchable attenuators 60 respond to the sensed velocity signal on line 89 to select range controls for filters 31 and 41 and for velocity profile circuits 46.

Switchable attenuators 60 determine the operation of filter 31 by adjusting the operation of operational amplifiers 71 and 79. The output stage of filter 31 consists of operational amplifier 79. Operational amplifier 71 supplies its output signal via resistor 77 to the first input of amplifier 79. A reference signal V1 is supplied to a second input of operational amplifier 79. A bridge circuit 84, 85, 86 connects the output line 33 of amplifier 79 to its first input at resistor 77. Diodes 85 and 86 constitute a non linear dynamic range change in their control of output amplifier 79. Diodes 85 and 86 operate identically in each shifted range of the filters 31. Attenuators 60 coact with the circuit elements 71 to 77 to dynamically change the effective or apparent capacitance of the filter illustrated in Fig. 4. This capacitance change changes the dynamic range scale of the filter.

Fig. 5 shows switchable attenuators 60. Switchable attenuators 60 include three separate attenuator circuits 91, 92 and 93 for filters 31 and 41 and for velocity profile circuits 46 respectively. Lines 45A, 45B, and 45C connect the attenuator circuits 91 to 93 to their respective controlled circuits as best seen in Figs. 2 and 3. Circuits 91, 92, 93 operate in synchronism to select the same attenuation, as will become apparent. The circuits 91, 92, 93 are all identical, except that the attenuation factors are related to the operation of the respectively controlled filters 31 and 41 and velocity profile circuits 46. Circuit 91 which controls filter 31 is explained, it being understood that the explanation applies to all circuits 91, 92, 93. The sensed velocity signal on line 89 is supplied to electronic switch 100. Switch 100 is designed to respond to the line 89 signal to selectively connect line 75A to input line 72A either without attenuation directly via terminal 101 (slow seek velocity), or through 1/10 attenuator 110 via terminal 102 during a relatively high speed portion of a seek or traversal, or by 1/100 attenuator 111 by terminal 103 during yet higher speed seek operation. Terminal 104 and dots 112 indicate that yet greater attenuations may be employed for enabling a greater velocity of traversal while maintaining servo circuit operation in one dynamic range. Lines 72B and 75B (in composite line 45B) and lines 72C and 75C (in composite line 45C) respectively for circuits 92 and 93, correspond to input lines 72A and 75A for circuit 91. Note that by range changing the output signal of profile circuits 46 to sum circuit 40, all servo parameters are dynamic range changed to be consonant with each other. The components of switchable attenuators 60 may be incorporated into filters 31, 41 and velocity profile circuits 46.

## Claims

1. A servo controlled positioning system comprising
two relatively moveable members (10, 14),
a motive means (11, 13) for positioning said two relatively moveable members,
sensing means (17) for sensing the relative positions of said relatively moveable members and for generating a position error signal (21) representing the relative positions of said members,
a servo mechanism (23) for processing said position error signal in accordance with the relative speed of movement of said members, and
means (24, 25, 26) for supplying said processed position error signal to said motive means so as to move said members into desired relative positions,
characterised in that said servo mechanism comprises
dynamic range changing means (31, 32) for changing the dynamic range of said position error signal in accordance with the range of speeds of relative movement of said members so that said dynamic range corresponds to a reference dynamic range,
means (36, 37, 38; 51, 52, 53, 55) for processing said position error signal after changing of its dynamic range, and
dynamic range restoring means (39) for restoring the dynamic range of said processed position error signal to its original value before the changing operation.

2. A positioning system as claimed in Claim 1 characterised in that said servo mechanism (23) comprises position error signal modifying means for further modifying said dynamic range changed position error signal in accordance with the required type of relative movement of said members (10, 14).

3. A positioning system as claimed in Claim 2 in which there are two required types of relative movement characterised in that said position error signal modifying means comprises means (36, 37) operable for one type of relative movement to sample said dynamic range changed position error signal and to pass the results of said sampling operation to said dynamic range restoring means, and means (36, 38) operable for the other type of relative movement to pass said dynamic range changed position error signal without further modification to said dynamic range restoring means.

4. A positioning system as claimed in Claim 2 in which there are three required types of relative movement characterised in that said position error signal modifying means comprises means (51) for rectifying said dynamic range modified position error signal, means (52, 54) operable for a first type of relative movement to pass said dynamic range changed position error signal rectified with one polarity to said dynamic range restoring means, means (53, 54) operable for a second type of relative movement to pass said dynamic range changed position error signal rectified with the opposite polarity to said dynamic range restoring means, and means (54, 55) for passing said dynamic range changed position error signal without further modification to said dynamic range restoring means.

5. A positioning system as claimed in any one of the preceding claims characterised in that said dynamic range changing means comprises a differentiating filter circuit (31) having a plurality of selectable modes of operation and first selection means (60) responsive to the dynamic range of said position error signal to select the mode of operation of said filter.

6. A positioning system as claimed in claim 5 characterised in that said selection means comprises a plurality of selectable signal attenuators (60, 88, 89).

7. A positioning system as claimed in any one of the preceding claims characterised in that said dynamic range restoring means comprises an integrating filter circuit (41) having a plurality of selectable modes of operation and further selection means (60, 46) responsive to the dynamic range of said position error signal to select the mode of operation of said integrating filter circuit.

8. A positioning system as claimed in Claim 7 characterised in that said further selection means comprises a plurality of selectable signal attenuators (60, 88, 89) and circuits (46) defining a set of selectable velocity profiles for the speed of relative movement of said relatively moveable members.

9. A method of controlling a positioning system of the type including two relatively moveable members and a motive means for positioning said two relatively moveable members, said method comprising
sensing the relative positions of said relatively moveable members and generating a position error signal representing the relative positions of said members,
processing said position error signal in accordance with the relative speed of movement of said members, and
supplying said processed position error signal to said motive means so as to move said members into desired relative positions,
characterised in that said processing operation comprises
changing the dynamic range of said position error signal in accordance with the range of speeds of relative movement of said members so that said dynamic range corresponds to a reference dynamic range,
processing said position error signal after changing its dynamic range, and
restoring the dynamic range of said processed position error signal to its original value before change.

## Patentansprüche

1. Ein servo-kontrolliertes Positionierungssystem mit zwei relativ beweglichen Gliedern (10, 14),
einem beweglichen Mittel (11, 13) zur Positionierung der beiden genannten relativ beweglichen Glieder,
einem Meßmittel (17) zur Messung der relativen Positionen der genannten beiden relativ beweglichen Glieder und zur Erzeugung eines Positionsfehlersignals (21), das die relative Position der genannten Glieder angibt,
einem Servomechanismus (23) zur Verarbeitung des genannten Positionsfehlersignals in Übereinstimmung mit der relativen Bewegungsgeschwindigkeit der genannten Glieder und
einem Mittel (24, 25, 26) zur Bereitstellung des verarbeiteten Positionsfehlersignals an das bewegliche Mittel, um die genannten Glieder in die gewünschten relativen Positionen zu bewegen,
dadurch charakterisiert, daß der Servomechanismus folgendes umfaßt:
ein dynamisches Änderungsmittel (31, 32) zur Änderung des dynamischen Bereichs des genannten Positionsfehlersignals in Übereinstimmung mit dem Bereich der Geschwindigkeiten der relativen Bewegung der genannten Glieder, so daß der genannte dynamische Bereich mit einem dynamischen Referenzbereich übereinstimmt,
ein Mittel (36, 37, 38; 51, 52, 53, 55) zur Verarbeitung des genannten Positionsfehlersignals nach der Änderung seines dynamischen Bereichs und
ein Mittel (39) zur Wiederherstellung des dynamischen Bereichs des genannten verarbeiteten Positionsfehlersignals, also zur Wiederherstellung des ursprünglichen Werts, vor der Änderungsoperation.

2. Ein Positionierungssystem gemäß Anspruch 1, dadurch charakterisiert, daß der genannte Servomechanismus (23) ein Positionsfehlersignaländerungsmittel umfaßt, der das genannte dynamisch bereichsgeänderte Positionsfehlersignal in Übereinstimmung mit der erforderlichen relativen Bewegung der genannten Glieder (10, 14) weiter modifiziert.

3. Ein Positionierungssystem gemäß Anspruch 2, in der es zwei erforderliche relative Bewegungen gibt, dadurch charakterisiert, daß das genannte Positionsfehlersignaländerungsmittel ein Mittel (36, 37), das zur Durchführung einer relativen Bewegung betätigt werden kann, um das genannte dynamisch bereichsgeänderte Positionsfehlersignal abzutasten und um die Ergebnisse der genannten Abtastoperation an das genannte Mittel zur Wiederherstellung des dynamischen Bereichs weiterzuleiten, und ein Mittel (36, 38) zur Durchführung der anderen relativen Bewegung, um das genannte dynamisch bereichsgeänderte Positionsfehlersignal ohne weitere Modifikation an das Mittel zur Wiederherstellung des genannten dynamischen Bereichs weiterzuleiten, umfaßt.

4. Ein Positionierungssystem gemäß Anspruch 2, in der es drei erforderliche relative Bewegungen gibt, dadurch charakterisiert, daß das genannte Positionsfehlersignaländerungsmittel ein Mittel (51) zur Rektifizierung des genannten dynamisch bereichsgeänderten Positionsfehlersignals, ein Mittel (52, 54) zur Durchführung einer ersten relativen Bewegung zur Weiterleitung des genannten dynamisch bereichsgeänderten Positionsfehlersignals, rektifiziert mit einer Polarität, an das genannte Mittel zur Wiederherstellung des dynamischen Bereichs, ein Mittel (53, 54) zur Durchführung einer zweiten relativen Bewegung zur Weiterleitung des genannten dynamisch bereichsgeänderten Positionsfehlersignals, rektifiziert mit einer Polarität, an das genannte Mittel zur Wiederherstellung des dynamischen Bereiehs, und ein Mittel (54, 55), um das genannte dynamisch bereichsgeänderte Positionsfehlersignal ohne weitere Modifikation an das Mittel zur Wiederherstellung des genannten dynamischen Bereichs weiterzuleiten, umfaßt.

5. Ein Positionierungssystem gemäß allen vorherigen Ansprüchen, dadurch charakterisiert, daß das genannte Mittel zur Änderung des dynamischen Bereichs eine Differenzierungsfilterschaltung (31) mit einer Mehrzahl auswählbarer Betriebsmodusarten und ein erstes Auswahlmittel (60), das auf den dynamischen Bereich des genannten Positionsfehlersignals zur Auswahl des Betriebsmodus des genannten Filters reagiert, umfaßt.

6. Ein Positionierungssystem gemäß Anspruch 5, dadurch charakterisiert, daß das genannte Auswahlmittel eine Mehrzahl an auswählbaren Signaldämpfern (60, 88, 89) umfaßt.

7. Ein Positionierungssystem gemäß allen vorherigen Ansprüchen, dadurch charakterisiert, daß das genannte Mittel zur Änderung des dynamischen Bereichs eine integrierende Filterschaltung (41) mit einer Mehrzahl auswählbarer Betriebsmodusarten und einem weiteren Auswahlmittel (60, 46), das auf den dynamischen Bereich des genannten Positionsfehlersignals zur Auswahl des Betriebsmodus der genannten integrierenden Filterschaltung reagiert, umfaßt.

8. Ein Positionierungssystem gemäß Anspruch 7, dadurch charakterisiert, daß das genannte weitere Auswahlmittel eine Mehrzahl auswählbarer Signaldämpfer (60, 88, 89) und Schaltungen (46), die eine Gruppe auswählbarer Geschwindigkeitsprofile für die Geschwindigkeit der relativen Bewegung der genannten relativ beweglichen Glieder definieren, umfaßt.

9. Ein Verfahren zur Kontrolle eines Positionierungssystems mit zwei relativ beweglichen Gliedern und einem beweglichen Mittel zur Positionierung der genannten beiden relativ beweglichen Glieder, wobei das Verfahren folgendes umfaßt:
Messung der relativen Positionen der genannten relativ beweglichen Glieder und Erzeugung eines Positionsfehlersignals, das die relativen Positionen der genannten Glieder darstellt,
Verarbeitung des genannten Positionsfehlersignals in Übereinstimmung mit der relativen Geschwindigkeit der Bewegung der genannten Glieder, und
Bereitstellung des genannten verarbeiteten Positionsfehlersignals an das genannte bewegliche Mittel, um die genannten Glieder in die gewünschten relativen Positionen zu bewegen,
dadurch charakterisiert, daß die genannte Verarbeitungsoperation folgendes umfaßt:
Änderung des dynamischen Bereichs des genannten Positionsfehlersignals in Übereinstimmung mit dem Bereich der Geschwindigkeiten der relativen Bewegung der genannten Glieder, so daß der genannte dynamische Bereich mit einem dynamischen Referenzbereich übereinstimmt,
Verarbeitung des genannten Positionsfehlersignals nach der Änderung seines dynamischen Bereichs, und
Wiederherstellung des vor der Änderung bestehenden ursprünglichen Werts des dynamischen Bereichs des genannten verarbeiteten Positionsfehlersignals.

## Revendications

1. Système de positionnement à servo-commande comprenant
deux éléments mobiles l'un par rapport à l'autre (10, 14),
un élément mobile (11, 13) pour positionner lesdits deux éléments mobiles l'un par rapport à l'autre,
un moyen de détection (17) pour détecter les positions relatives desdits éléments mobiles l'un par rapport à l'autre et pour générer un signal d'erreur de position (21) représentant les positions relatives desdits éléments,
un mécanisme d'asservissement (23) pour traiter ledit signal d'erreur de position en fonction de la vitesse relative de déplacement desdits éléments, et
des moyens (24, 25, 26) pour appliquer ledit signal d'erreur de position traité audit moyen mobile de manière à déplacer lesdits éléments dans lesdites positions relatives souhaitées,
caractérisé en ce que ledit mécanisme d'asservissement comprend
des moyens (31, 32) de changement de plage dynamique pour changer la plage dynamique dudit signal d'erreur de position en fonction de la plage de vitesses du mouvement relatif desdits éléments de telle sorte que ladite plage dynamique correspond à une plage dynamique de référence,
des moyens (36, 37, 38; 51, 52, 53, 55) pour traiter ledit signal d'erreur de position après changement de sa plage dynamique, et
un moyen (39) de rétablissement de la plage dynamique pour rétablir la plage dynamique dudit signal d'erreur de position traité dans sa valeur originale avant l'opération de changement.

2. Système de positionnement selon la revendication 1 caractérisé en ce que ledit mécanisme d'asservissement (23) comprend un moyen de modification de signal d'erreur de position pour modifier encore ledit signal d'erreur de position changée de ladite plage dynamique en fonction du type requis de mouvement relatif desdits éléments (10, 14).

3. Système de positionnement selon la revendication 2 dans lequel il y deux types requis de mouvement relatif caractérisé en ce que ledit moyen de modification de signal d'erreur de position comprend un moyen (36, 37) pouvant fonctionner pour un type de mouvement relatif afin d'échantillonner ledit signal d'erreur de position changé de la plage dynamique et pour laisser passer les résultats de ladite opération d'échantillonnage vers ledit moyen de rétablissement de la plage dynamique, et un moyen (36, 38) pouvant fonctionner pour l'autre type de mouvement relatif afin de laisser passer ledit signal d'erreur de position changée de la plage dynamique sans autre modification dudit moyen de rétablissement de la plage dynamique.

4. Système de positionnement selon la revendication 2 dans lequel il y trois types requis de mouvement relatif caractérisé en ce que le moyen de modification du signal d'erreur de position comprend un moyen (51) pour redresser ledit signal d'erreur de position modifié de la plage dynamique, un moyen (52, 54) pouvant fonctionner pour un premier type de mouvement relatif pour laisser passer ladite plage dynamique du signal d'erreur de position changé redressé avec une polarité vers ledit moyen de rétablissement de la plage dynamique, un moyen (53, 54) pouvant fonctionner pour un second type de mouvement relatif pour laisser passer ledit signal d'erreur de position changé de plage dynamique redressé avec la polarité opposée vers ledit moyen de rétablissement de la plage dynamique, et un moyen (54, 55) pour laisser passer ledit signal d'erreur de position changé de plage dynamique sans autre modification vers ledit moyen de rétablissement de la plage dynamique.

5. Système de positionnement selon l'une quelconque des revendications précédentes caractérisé en ce que ledit moyen de changement de la plage dynamique comprend un circuit de filtrage différentiateur (31) comportant une pluralité de modes fonctionnement pouvant être sélectionnés et un premier moyen de sélection (60) sensible à la plage dynamique dudit signal d'erreur de position pour sélectionner le mode de fonctionnement dudit filtre.

6. Système de positionnement selon la revendication 5 caractérisé en ce que ledit moyen de sélection comprend une pluralité d'atténuateurs pouvant être sélectionnés (60, 88, 89) de signaux.

7. Système de positionnement selon l'une quelconque des revendications précédentes, caractérisé en ce que ledit moyen de rétablissement de la plage dynamique comprend un circuit de filtrage intégrateur (41) ayant une pluralité de modes de fonctionnement pouvant être sélectionnés et d'autres moyens de sélection (60, 46) sensibles à la plage dynamique dudit signal d'erreur de position pour sélectionner le mode de fonctionnement dudit circuit de filtrage intégrateur.

8. Système de positionnement selon la revendication 7 caractérisé en ce que lesdits autres moyens de sélection comprennent une pluralité d'atténuateurs (60, 88, 89) de signaux pouvant être sélectionnés et des circuits (46) définissant une série de profils de vitesse pouvant être sélectionnés pour la vitesse de déplacement relatif desdits éléments mobiles les uns par rapport aux autres.

9. Procédé de commande d'un système de positionnement du type comportant deux éléments mobiles l'un par rapport à l'autre, et un moyen mobile pour positionner lesdits deux éléments mobiles l'un par rapport à l'autre, ledit procédé comprenant
la détection des positions relatives desdits éléments mobiles l'un par rapport à l'autre et générant un signal d'erreur de position représentant les positions relatives desdits éléments,
le traitement dudit signal d'erreur de position conformément à la vitesse relative de déplacement desdits éléments, et
l'application dudit signal d'erreur de position traité auxdits moyens moblies de manière à déplacer lesdits éléments dans les positions relatives souhaitées,
caractérisé en ce que ladite opération de traitement comprend
le changement de la plage dynamique dudit signal d'erreur de position conformément à la plage de vitesses de déplacement relatif desdits éléments de telle sorte que ladite plage dynamique correspond à une plage dynamique de référence,
le traitement dudit signal d'erreur de position après le changement de sa plage dynamique, et
le rétablissement de la plage dynamique dudit signal d'erreur de position traité dans sa valeur d'origine avant changement.
